# EUROPEAN PATENT SPECIFICATION

(11) **EP 3 369 926 B1**
(45) Date of publication and mention of the grant of the patent: **03.03.2021**
(21) Application number: 16859278.0
(22) Date of filing: 24.10.2016
(51) Int. Cl.: F03G 6/00, F01K 7/22, F01K 27/02, F22G 5/12, F01K 13/02, F22B 1/00, F22G 5/00

(54) **SOLAR THERMAL POWER GENERATION SYSTEM AND METHOD FOR CONTROLLING SAME**
SYSTEM ZUR ERZEUGUNG VON SOLARTHERMISCHER ENERGIE UND VERFAHREN ZUR STEUERUNG DAVON
SYSTÈME DE PRODUCTION D'ÉNERGIE SOLAIRE THERMIQUE ET SON PROCÉDÉ DE RÉGULATION

(30) Priority: 28.10.2015 JP 2015211799
(43) Date of publication of application: 05.09.2018
(73) Proprietor: Chiyoda Corporation, Kanagawa 220-8765 (JP)
(72) Inventor: KAMBARA, Masashi, Yokohama-shi Kanagawa 220-8765 (JP); SHEN, Lujie, Yokohama-shi Kanagawa 220-8765 (JP); DOI, Norihiko, Yokohama-shi Kanagawa 220-8765 (JP); ARIMA, Daisuke, Yokohama-shi Kanagawa 220-8765 (JP); OZAKI, Yuhi, Yokohama-shi Kanagawa 220-8765 (JP)
(74) Representative: Schiener, Jens
(86) International application number: PCT/JP2016/004668
(87) International publication number: WO 2017/073040

(56) References cited:
- WO-A2-2013/018014
- WO-A2-2014/146845
- DE-A1-102011 054 618
- DE-A1-102012 102 115
- DE-A1-102012 102 115
- JP-A- S5 669 408
- JP-A- S62 121 807
- US-A1- 2013 019 599
- US-A1- 2013 081 394
- US-A1- 2013 111 902
- US-A1- 2013 186 089
- US-A1- 2013 269 682
- US-A1- 2015 128 594

## Description

### Technical Field

This invention relates to a solar thermal power generation system and a method of controlling the same. More specifically, the present invention relates to a solar thermal power generation system employing molten salt as solar thermal storage medium and as heating medium for steam generation so as to generate electric power by means of generated steam and also to a method of controlling such a power generation system.

### Background Art

Many scientific and technological researches have been made in recent years for power generation using renewable energy as energy sources because of the increasing concern about exhaustion of fossil fuels. Out of many renewable energy sources, solar power generators and solar thermal power generators that utilize solar energy as energy sources have already been running on a commercial basis and the scope of utilization of solar energy is expected to expand in future.

However, the amount of solar radiation does not meet the demand for solar energy in rainy days and cloudy days. In other words, solar power generation cannot meet the demand for electric power that incessantly fluctuates. Even in sunny days, solar irradiation can temporarily be intercepted by clouds and hence solar irradiation can hardly be constantly available to in turn make solar power generation unstable.

Solar thermal power generation has been conceived to cope with the above identified problem. With solar thermal power generation, sunlight is once transformed into heat before it is employed for power generation. More specifically, thermal storage systems are employed for solar thermal power generation and the surplus heat obtained when sunlight irradiation is excessive is stored and the stored heat is utilized when sunlight irradiation is insufficient in order to realize smooth and flat solar power generation.

Solar thermal power generation using molten salt as thermal storage medium has two main streams. One is using heating medium other than molten salt and the other is circulating molten salt so as to use molten salt both as thermal storage medium and as heating medium.

In the instance of solar thermal power generation of the former type, a heat exchanger needs to be installed between the heating medium (other than molten salt) and the thermal storage medium (molten salt) and hence solar thermal power generation systems of the former type has a system configuration that is more complex than solar thermal power generation systems of the latter type. To the contrary, solar thermal power generation systems of the latter type can produce steam that is hotter if compared with solar thermal power generation systems using oil or the like as heating medium and hence they can achieve a higher efficiency and realize a simpler system configuration.

For example, PTL 1 describes a solar thermal power generation system that employs nitrate-based molten salt both as heating medium and thermal storage medium and can run continuously at high temperature.

US 2015/0128594 A1 discloses a temperature and flow rate regulation system for heat transfer fluid in a hybrid steam-generating system.

US 2013/0269682 A1 discloses a process for producing superheated steam from a concentrating solar plant.

### Citation List

### Patent Literature

PTL 1: Japanese PCT National Publication No. 2015-520250

### Summary of Invention

### Technical Problem

However, a solar thermal power generation system employing molten salt as heating medium is accompanied by a problem that the exhaust gas temperature of the low-pressure turbine rises excessively high in low load operations. Such a high exhaust gas temperature can damage the turbine blades of the low-pressure turbine. While damages to turbine blades can be prevented from taking place by suspending the power generating operation, the power generation efficiency of a solar thermal power generation system remarkably falls when the power generating operation is suspended.

Meanwhile, known techniques for lowering the exhaust gas temperature of low-pressure turbines include a technique of spraying water to the casing of the low-pressure turbine and a technique of lowering the temperature of the steam that is being supplied by lowering the temperature of the molten salt that is being supplied.

However, the technique of spraying water to the casing of the low-pressure turbine is accompanied by a problem that a satisfactory cooling effect can hardly be achieved because the turbine blades of the low-pressure turbine is not directly cooled and the use of the technique requires additional capital investment cost for installing a cooling mechanism. The technique of lowering the temperature of the molten salt, on the other hand, cannot dissolve the problem of lowering the power generation efficiency because it can lower the exhaust gas temperature of the low-temperature turbine but it also lower the temperature of the superheated steam being supplied to the high-pressure turbine.

In view of the above-identified problems of the prior art, it is therefore the object of the present invention to provide a solar thermal power generation system and a method of controlling a solar thermal power generation system that can improve the durability of the low-pressure turbine by suppressing the temperature rise of the exhaust gas of the low-pressure turbine without involving any increase in cost and, at the same time, realize power generation with higher efficiency.

### Solution to Problem

A method of controlling a solar thermal power generation system according to the present invention is a method of controlling a solar thermal power generation system comprising a steam generator for generating steam by heating water with molten salt, a superheater for producing superheated steam by further heating the steam generated by the steam generator with molten salt, a high-pressure turbine driven by the superheated steam supplied from the superheater, a reheater for producing reheated steam by reheating the intermediary exhaust steam coming from the high-pressure turbine with molten salt, a low-pressure turbine driven by the reheated steam supplied from the reheater, a condenser for condensing the exhaust steam coming from the low-pressure turbine into water to be supplied to the steam generator and a reheated steam temperature detector for detecting the temperature of the reheated steam to be supplied to the low-pressure turbine, wherein the method comprises a reheater molten salt quantity control process of controlling the quantity Mr of the molten salt to be supplied to the reheater and the quantity Mr of the molten salt is controlled in the reheater molten salt quantity control process so as to make the temperature of the reheated steam not lower than 370°C and not higher than 430°C as detected by the reheated steam temperature detector in a low load operation with a load ratio not higher than a predetermined load ratio relative to the rated load of the solar thermal power generation system.

A solar thermal power generation system according to the present invention comprises a steam generator for generating steam by heating water with molten salt, a superheater for producing superheated steam by further heating the steam generated by the steam generator with molten salt, a high-pressure turbine driven by the superheated steam supplied from the superheater, a reheater for producing reheated steam by reheating the intermediary exhaust steam coming from the high-pressure turbine with molten salt, a low-pressure turbine driven by the reheated steam supplied from the reheater, a condenser for condensing the exhaust steam coming from the low-pressure turbine into water to be supplied to the steam generator, a reheated steam temperature detector for detecting the temperature of the reheated steam to be supplied to the low-pressure turbine and a reheater molten salt quantity control section for controlling the quantity Mr of the molten salt to be supplied to the reheater, wherein the reheater molten salt quantity control section controls the quantity Mr of the molten salt so as to make the temperature of the reheated steam not lower than 370°C and not higher than 430°C as detected by the reheated steam temperature detector in a low load operation with a load ratio not higher than a predetermined load ratio relative to the rated load of the solar thermal power generation system.

### Advantageous Effects of Invention

The present invention provides a solar thermal power generation system and a method of controlling a solar thermal power generation system that can improve the durability of the low-pressure turbine by suppressing the temperature rise of the exhaust gas of the low-pressure turbine without involving any increase in cost and, at the same time, realize power generation with higher efficiency.

### Brief Description of Drawings

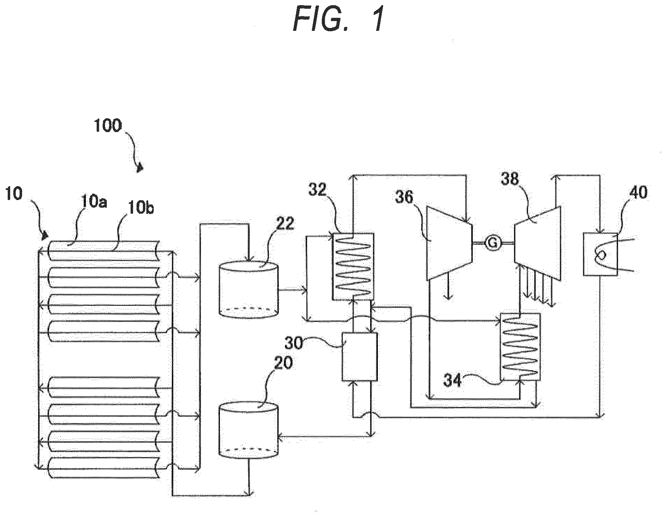

FIG. 1 is a schematic illustration of the configuration of a solar thermal power generation system to be used for an embodiment of method of controlling a solar thermal power generation system according to the present invention.

### Description of Examples

Now, a method of controlling a solar thermal power generation system and a solar thermal power generation system according to the present invention will be described in greater detail by referring to the accompanying drawings.

It should be noted here that the embodiment as described hereinafter is subject to various technically preferable limitations because the embodiment is a currently preferable one, although the scope of the present invention is by no means limited to the mode of carrying out the invention as described hereinafter unless otherwise noted in the following description of the present invention.

FIG. 1 is a schematic illustration of the configuration of a solar thermal power generation system to be used for an embodiment of method of controlling a solar thermal power generation system according to the present invention.

The solar thermal power generation system of this embodiment is a so-called direct two-tank type solar thermal power generation system that employs molten salt commonly both as thermal storage medium and as heating medium.

Now, the configuration of the solar thermal power generation system of this embodiment will be described below by following the solar thermal power generation process.

### (Heating Section)

Since the energy density of sunlight is low, the technique of concentrated solar power (CSP) generation of condensing sunlight and converting the condensed sunlight into heat is being widely adopted. The solar thermal power generation system of this embodiment also adopts CSP generation.

Therefore, it is preferable for the heating section 10 for heating molten salt to condense sunlight in order to heat molten salt.

The heating section 10 of this embodiment is of the parabolic trough type and includes gutter-shaped linearly extending condensers/reflectors 10a having a parabolic cross section and branches of conduit 10b each extending along or near the focal points of the parabolas (linearly extending through the focal points of the parabolic cross sections) of the corresponding one of the gutter-shaped condensers/reflectors 10a. Rays of sunlight reflected by the condensers/reflectors 10a are condensed at the continuous positions of the branches of the conduit 10b and transformed into heat, which heat in turn heats the molten salt flowing through the branches of the conduit 10b.

The parabolic trough type heating section 10 has a simple structure and hence can be provided at relatively low cost and, at the same time, it does not require any sophisticated light condensing technique. In other words, the parabolic tough type heating section 10 can excellently operate with ease for condensation of sunlight. Because of these advantages, solar thermal power generation systems having a parabolic trough type heating section have a proven track record and are excellent in terms of reliability.

However, it should be noted here that the heating section 10 of this embodiment is by no means limited to the parabolic trough type and a heating section of any other type can be adopted for this embodiment so long as it can satisfactorily heat molten salt by means of thermal energy. Therefore, a heating section of any other known popular type such as the linear Fresnel type, the tower type or the dish type may be employed to replace the parabolic trough type heating section for the purpose of the present invention. Still alternatively, two or more than two of the above listed types may be employed in combination.

The heating section 10 of this embodiment as shown in FIG. 1 includes a total of eight condensers collectors/reflectors 10a and a common conduit 10b that is branched to the eight thermal collectors/reflectors 10a. However, note that, for the purpose of the present invention, the parabolic trough type heating section is by no means limited to the above-described arrangement and may include an arbitrarily selected number of solar collectors/reflectors and/or the conduit of the heating section may have any arbitrarily selected piping arrangement.

The heating section 10 heats molten salt to a temperature level higher than 400°C, which is the upper limit temperature when oil is conventionally employed as heating medium. While the temperature to which molten salt is heated in the heating section 10 of this embodiment is not subjected to any limitations so long as the temperature does not give rise to any thermal decomposition or the like of the molten salt of the heating section 10 that consequently results in an irreversible change to the molten salt and degrades the performance of the molten salt, although a higher temperature is preferable from the viewpoint of high-efficiency power generation. However, the heating temperature needs to be determined by taking the heat resistance of the entire system including the conduit 10b, the efficiency of power generation, the cost and other factors into consideration.

The heating section 10 of this embodiment heats molten salt to not lower than 500°C, preferably not lower than 500° and not higher than 600°C, more preferably not lower than 540°C and not higher than 560°C.

The conduit 10b connects a low-temperature thermal storage tank 20 and a high-temperature thermal storage tank 22 by way of the sunlight condensing sites of the heating section 10. The conduit 10b can flow the molten salt stored in the low-temperature thermal storage tank 20 and lead the flowing molten salt to the high-temperature thermal storage tank 22.

### (Molten Salt)

For solar thermal power generation systems, the use of nitrate-based molten salt is advantageous from the viewpoint of safety, stability and cost and hence nitrate-based molten salt is being popularly employed. When nitrate-based molten salt is employed as heating medium, it can be heated to a temperature level higher than the temperature level that is obtained when oil is employed as conventional heating medium. Then, high-temperature steam can be obtained to realize high-efficiency solar thermal power generation. When oil is employed as heating medium for solar thermal power generation and heated to a temperature level higher than 400°C for a long period of time, the oil can be decomposed to degrade its performance. When, on the other hand, nitrate-based molten salt is employed as heating medium and heated to a temperature level higher than 400°C for a long period of time, the molten salt is not decomposed at all and hence no degradation of its performance occurs.

For this embodiment, a mixture of sodium nitrate and potassium nitrate is employed as molten salt. It should be noted, however, the present invention is by no means limited to the use of such a mixture. In other words, any molten salt can be used for the purpose of the present invention so long as it is available both as thermal storage medium and heating medium for solar thermal power generation systems.

As nitrate-based molten salt, not only the two-component mixture of sodium nitrate and potassium nitrate but also any of three-component mixture of sodium nitrate, potassium nitrate and lithium nitrate or the like and four-component mixture are known to date and any of these mixtures may selectively be employed for the purpose of the present invention.

The two-component mixture of sodium nitrate and potassium nitrate shows a melting point of about 230°C and the heating system is so controlled as to heat the molten salt mixture to a temperature level higher than the melting point by 40 to 50°C in the actual operation environment in order to prevent the molten salt from being solidified. The melting point of the molten salt mixture is preferably low from the viewpoint of reducing the level of thermal energy consumption for the purpose of prevention of solidification particularly during the night in winter. However, it should be noted that molten salt needs to be selected by taking the safety, the stability, the viscosity at the operating temperature, the cost and other relevant factors into consideration.

### (Low-Temperature Thermal Storage Tank, High-Temperature Thermal Storage Tank)

The solar thermal power generation system 100 of this embodiment comprises a low-temperature thermal storage tank 20 and a high-temperature thermal storage tank 22. More specifically, the solar thermal power generation system 100 of this embodiment comprises a two-tank type thermal storage section and low-temperature molten salt and high-temperature molten salt are separated and stored respectively in the low-temperature thermal storage tank and the high-temperature thermal storage tank. Note, however, the thermal storage section of the present invention is by no means limited to the two-tank type and any other arrangement can alternatively be employed for the purpose of the present invention so long as it can separately and independently supply low-temperature molten salt and high-temperature molten salt.

For instance, single tank type thermal storage sections are known in addition to two-tank type thermal storage sections. With a single tank type thermal storage section, high-temperature molten salt is stored in an upper part of a single tank, while low-temperature molten salt is stored in a lower part of the single tank. Then, high-temperature molten salt and low-temperature molten salt can separately and independently be supplied from the single tank.

In this embodiment, molten salt is stored in the low-temperature thermal storage tank 20 when its temperature is low. The molten salt stored in the low-temperature thermal storage tank 20 receives solar energy from the condensers/reflectors 10a to become hot as it is put in the branches of the conduit 10b. Then, as the molten salt is heated to become hot, all the heated high-temperature molten salt is then stored in the high-temperature thermal storage tank 22 in this embodiment.

Both the low-temperature thermal storage tank 20 and the high-temperature thermal storage tank 22 are not subjected to any particular limitations so long as they can store molten salt. The low-temperature thermal storage tank 20 and the high-temperature thermal storage tank 22 of this embodiment can store molten salt whose temperature will be shifted from a low-temperature level of about 270°C to a high-temperature level of about not lower than 500°C and vice versa and have a thermal insulation property, a thermal resistance property and durability. Additionally, it is particularly preferable that both the low-temperature thermal storage tank 20 and the high-temperature thermal storage tank 22 have high-mechanical strength and will not be damaged if the molten salt they contain is unexpectedly solidified.

### (Superheater)

The superheater 32 generates superheated steam by way of heat exchange between heating medium (molten salt) and steam and supplies the superheated steam to the high-pressure turbine 36, which will be described in detail hereinafter.

High-temperature molten salt is supplied to the superheater 32 from the high-temperature thermal storage tank 22. As pointed out above, this embodiment is so designed that high-temperature molten salt is supplied to the superheater 32 from the high-temperature thermal storage tank 22.

Additionally, steam (water vapor) generated in the steam generator 30 is also supplied to the superheater 32.

Then, the supplied steam is heated by way of heat exchange between hot-temperature molten salt and the steam to become superheated steam. On the other hand, the molten salt that has discharged heat as a result of the heat exchange is fed to the steam generator 30.

### (Steam Generator)

The steam generator 30 heats the water supplied from the condenser 40, which will be described in detail hereinafter, to generate steam. Then, it supplies the steam it generates to the superheater 32.

In the steam generator 30, the water supplied from the condenser 40 is heated to become steam by way of heat exchange between the molten salt discharged from the superheater 32 and the molten salt discharged from the reheater 34, which will be described in detail hereinafter.

On the other hand, the molten salt that is cooled to become low-temperature molten salt as a result of discharging heat in the heat exchange is fed to the low-temperature thermal storage tank 20.

### (High-Pressure Turbine)

The high-pressure turbine 36 is driven to operate by the superheated steam supplied from the superheater 32. More specifically, the turbine blades that the high-pressure turbine 36 has are driven to turn by the work of the superheated steam and the generator G generates electric power. The superheated steam that has done its work is discharged to the reheater 34, which will be described in detail hereinafter, as intermediary exhaust steam.

The steam in the high-pressure turbine 36 of this embodiment is partly extracted and discharged to a preheater (not shown). The power generation efficiency of this embodiment can be raised as the heat of the extracted steam is utilized by the preheater.

### (Reheater)

The reheater 34 produces reheated steam by way of heat exchange between heating medium (molten salt) and intermediary exhaust steam and supplies the produced reheated steam to the low-pressure turbine 38, which will be described in detail hereinafter.

High-temperature molten salt is supplied to the reheater 34 from the high-temperature thermal storage tank 22. As pointed out above, this embodiment is so designed that high-temperature molten salt is supplied to the reheater 34 from the high-temperature thermal storage tank 22.

The intermediary exhaust steam discharged from the high-pressure turbine 36 is supplied to the reheater 34.

Then, the intermediary exhaust steam supplied from the high-pressure turbine 36 is heated by heat exchange between itself and high-temperature molten salt to become reheated steam. On the other hand, the molten steam that has discharged heat as a result of the heat exchange is then fed to the steam generator 30.

Note that the molten salt supplied from the high-temperature thermal storage tank 22 is divided into two parts, one of which is then supplied to the superheater 32 while the other is supplied to the reheater 34.

### (Low-Pressure Turbine)

The low-pressure turbine 38 is driven to operate by the reheated steam supplied from the reheater 34. More specifically, the turbine blades of the low-pressure turbine 38 are driven to turn by the work of the reheated steam and the generator G generates electric power. The reheated steam that has done its work is discharged to the condenser 40, which will be described in detail hereinafter, as exhaust steam.

From the inside of the low-pressure turbine 38 of this embodiment, part of the steam is extracted stepwise (in four steps) and discharged typically to a heat exchanger (not shown) or the like. The power generation efficiency of this embodiment can be improved as the heat of the extracted steam is utilized by the heat exchanger or the like.

### (Condenser)

The condenser 40 is provided to cool and condense the exhaust steam discharged from the low-pressure turbine 38 into water, thereby reducing the back pressure and raising the output. The obtained water is supplied to the steam generator 30 to serve for power generation once again.

### (Circulation Means)

The above-described water and steam including superheated steam, reheated steam and so on are forced to circulate in the solar thermal power generation system by circulation means (not shown) including pumps that are appropriately arranged on the water/steam circulation path.

On the other hand, the molten salt is forced to circulate in the solar thermal power generation system by circulation means (not shown) including pumps that are appropriately arranged on the molten salt circulation path.

### (Reheated Steam Temperature Detector)

The reheated steam temperature detector (not shown) detects the temperature of the reheated steam that is discharged from the reheater 34 and supplied to the low-pressure turbine 38. Therefore, the reheated steam temperature detector is arranged on the steam flow path between the outlet of the reheater 34 and the inlet of the low-pressure turbine 38.

The reheated steam temperature detector may be arranged at any position on the steam flow path between the outlet of the reheater 34 and the inlet of the low-pressure turbine 38 so long as the position is good for accurately detecting the reheated steam temperature. In this embodiment, a plurality of reheated steam temperature detectors are arranged near the inlet of the low-pressure turbine 38 and each of them detects the reheated steam temperature.

The reheated steam temperature detector is not subjected to any particular limitations so long as it can detect the reheated steam temperature. In other words, any temperature detecting mechanism may be adopted for the reheated steam temperature detector.

While there are no particular limitations to the timing of detecting the reheated steam temperature by means of the reheated steam temperature detector, the reheated steam temperature detector of this embodiment is so arranged as to constantly (continuously) detect the reheated steam temperature so that any abnormal situation that may arise to the solar thermal power generation system 100 can immediately be detected. Note, however, that the present invention is by no means limited to such an arrangement and it may alternatively be so arranged that the reheated steam temperature is detected only during the low charge operation of the solar thermal power generation system.

The reheated steam temperature detected by the reheated steam temperature detector is sent to the reheater molten salt quantity control section, which is the section for controlling the quantity of molten salt to be supplied to the reheater in a low load operation as will be described in detail hereinafter.

### (Low Load Operation)

The solar thermal power generation system is designed to normally run under 100% load relative to the rated load.

However, whenever necessary, the load is reduced so that the solar thermal power generation system runs under low load. Such instances include those where the amount of solar radiation does not meet the requirement level and high-temperature molten salt is in short supply and those where the demand for electric power is small and the solar thermal power generation system is not allowed to satisfactorily transmit electric power to the outside.

If the amount of solar radiation does not meet the requirement level because of the rainy or cloudy weather or during the night, where high-temperature molten salt is insufficient in quantity, but the solar thermal power generation system is forced to run for a normal operation, the temperature of the stored high-temperature molten salt falls and the molten salt can ultimately become solidified in the solar thermal power generation system. In such an instance, the load is reduced to make the solar thermal power generation system run under low load in order to suppress the consumption of high-temperature molten salt and prevent solidification of the molten salt until solar irradiation rises high.

When the solar thermal power generation system is not allowed to satisfactorily transmit electric power to the outside particularly in early morning and late at night because the power consumption rate is low, the solar thermal power generation system cannot run for a normal operation and hence is forced to run under low load until the power consumption rate rises.

Generally, solar thermal power generation systems are designed to run for normal operations and low load operations in a switched manner.

Meanwhile, the solar thermal power generation system 100 can achieve the highest power generation efficiency and operate well for power generation without causing the temperature of the exhaust steam coming out from the low-pressure turbine 38 to rise to an undesirably high level when it is made to run under the rated load (or 100% load). However, since the solar thermal power generation system 100 is designed to circulate molten salt that can become very hot as heating medium, the temperature of the exhaust steam coming out from the low-pressure turbine 38 rises so that problems such as damages to the turbine blades can arise when the solar thermal power generation system 100 is made to run under low load.

In view of such possible problems, this embodiment is so designed that, when it is forced to run under a low load condition where the load is not greater than a predetermined ratio of the rated load, the quantity Mr of molten salt to be supplied to the reheater 34 is controlled by means of a reheater molten salt quantity control process, (reheater molten salt quantity control section) so as to prevent the temperature of the exhaust steam coming out from the low-pressure turbine 38 from excessively rising on a low load operation status where the solar thermal power generation system 100 is made to run with a load not greater than a predetermined ratio of the rated load.

The expression of "a low load operation status" as used in the description of this embodiment refers to an operation status where the load of the solar thermal power generation system 100 is not greater than 25% of the rated load. Note, however, when the load is too low, the operation of the solar thermal power generation system 100 can get into trouble. Therefore, even in an instance where the solar thermal power generation system 100 is required to be operated under low load, the system 100 has to run with a load not lower than the allowable minimum load. The expression of the allowable minimum load as used herein refers to the lowest necessary load for the operation of the solar thermal power generation system.

This embodiment is made to run for a low load operation with a load that is preferably not less than 5% and not more than 25%, more preferably not less than 5% and not more than 20%, most preferably not less than 7% and not more than 15%.

Note, however, that the present invention is by no means limited to the above-described range of load. Since the rated load and the allowable minimum load are specific to each solar thermal power generation system, any solar thermal power generation system is most preferably made to run on a low load operation status with a load that is equal to the predetermined ratio of the rated load of the solar thermal power generation system that is specific to the system.

### (Reheater Molten Salt Quantity Control Section, Reheater Molten Salt Quantity Control Process)

The reheater molten salt quantity control section obtains the reheated steam temperature output from the reheated steam temperature detector in a low load operation and controls the quantity Mr of molten salt to be supplied to the reheater 34 so as to make the reheated steam temperature not higher than 430°C. When the reheated steam temperature exceeds 450°C in the low load operation, the reheater molten salt quantity control section of this embodiment reduces the quantity Mr of molten salt to be supplied to the reheater 34 so as to make the reheated steam temperature not higher than 450°C. The reheated steam temperature is not lower than 370°C and not higher than 430°C.

As the temperature of the reheated steam to be supplied to the low-pressure turbine 38 falls so as to be not higher than 450°C during the low load operation, the inside of the low-pressure turbine 38 never becomes excessively hot and hence the turbine blades of the low-pressure turbine 38 are prevented from being damaged. Additionally, since the temperature of the molten salt to be supplied to the superheater 32 and the reheater 34 does not fall, the temperature of the superheated steam is held to be not lower than 500°C so that the power generation efficiency of the solar thermal power generation system 100 is prevented from falling and hence the system 100 can operate for high-efficiency power generation.

Note that, the power generation efficiency of the low-pressure turbine 38 undesirably falls if the reheated steam temperature is unnecessarily lowered. On the other hand, the temperature of the exhaust steam discharged from the low-pressure turbine 38 needs to be lowered in order to satisfactorily reduce the risk of damaging the turbine blades of the low-pressure turbine 38. Therefore, it is particularly desirable to maintain the temperature of the reheated steam to a high level from the viewpoint of achieving high-power generation efficiency, although the temperature of the reheated steam needs to be not higher than 450°C. More specifically, it is particularly desirable to control the quantity Mr of molten salt so as to keep the temperature of the reheated steam to a level that is good for achieving high-power generation efficiency, while taking the model of the solar thermal power generation system 100, that of the low-pressure turbine 38 and the ratio of the load of the solar thermal power generation system 100 in operation relative to the rated load into consideration and avoiding the risk of damaging the turbine blades of the low-pressure turbine 38.

The reheater molten salt quantity control section may be so arranged as to control the quantity Mr of molten salt to be supplied to the reheater 34 by obtaining not only the temperature of the reheated steam output from the reheated steam temperature detector but also one or more than one other temperatures. For instance, the quantity Mr of molten salt to be supplied to the reheater 34 may be controlled by acquiring the temperature output from a temperature detector that can detect the temperature of the steam discharged from the outlet of the low-pressure turbine 38 and using it as control factor for controlling the quantity Mr of molten salt to be supplied to the reheater 34 along with the temperature of the reheated steam output from the reheated steam temperature detector.

### (Control of the Amount of Molten Salt in the Overall Solar Thermal Power Generation System)

The amount of steam to be used per unit time by the solar thermal power generation system 100 is determined on the basis of its electric power generation capacity. As the amount of steam to be used per unit time is determined, the required amount of high-temperature molten salt, which is the total amount Mt of molten salt to be supplied to both the superheater 32 and the reheater 34, is determined.

Additionally, as pointed out above, the quantity Mr of molten salt to be supplied to the reheater 34 during a low load operation is determined by the reheater molten salt quantity control section.

Therefore, the difference (Mt - Mr) between the total amount Mt of molten salt to be supplied to both the superheater 32 and the reheater 34 and the quantity Mr of molten salt to be supplied to the reheater 32 is equal to the quantity Ms of molten salt to be supplied to the superheater 32. In this way, it is possible to determine and control the quantity of molten salt to be supplied (circulated) for the entire solar thermal power generation system 100 for a low load operation.

On the other hand, the quantity Mr of molten salt to be supplied to the reheater 34 for a normal operation can theoretically be determined. In other words, it is not necessary to control the quantity Mr of molten salt to be supplied to the reheater 34 by means of the reheater molten salt quantity control section for the normal operation.

### (Other Arrangements)

In addition to the above-described arrangements for a solar thermal power generation system according to the present invention, any of the conventional arrangements that are provided for solar thermal power generation system may also be provided for a solar thermal power generation system according to the present invention.

### Examples

Now, the present invention will be described in greater detail by way of simulation examples, although the present invention is by no means limited by the examples.

### (Example 1, Comparative Examples 1-2, Reference Example 1)

The solar thermal power generation of the solar thermal power generation system as shown in FIG. 1 was computer simulated in each of Example 1, Comparative Examples 1∼2 and Reference Example 1.

In Comparative Example 1, a low load operation where the solar thermal power generation system 100 was operated with 10% load of the rated load was computer simulated. In Comparative Example 1, the temperature (of the superheated steam) at the inlet of the high-pressure turbine and the temperature (of the reheated steam) at the inlet of the low-pressure turbine were lowered under control by lowering the temperature of molten salt itself.

In Comparative Example 1, the steam temperature at the outlet of the low-pressure turbine 38 was 53.83°C. Additionally, the electric power generation efficiency of Comparative Example 1 was employed as reference value to evaluate the electric power generation efficiency of Comparative Example 2 and that of Example 1 as will be described in greater detail hereinafer.

In Comparative Example 2, a low load operation where the solar thermal power generation system 100 was operated with 10% load of the rated load was computer simulated. However, in Comparative Example 2, the temperature of molten salt was not lowered unlike in Comparative Example 1 but the quantity Mr of molten salt to be supplied to the reheater 34 was controlled in the conventional manner of using the target steam flow rate as index.

In Comparative Example 2, while the electric power generation efficiency was raised by about 2.95% when compared with the electric power generation efficiency of Comparative Example 1, the steam temperature at the outlet of the low-pressure turbine 38 was 126.80°C, which was far higher than the temperature that the low-pressure turbine 38 can endure in actual operations.

In Example 1, the quantity Mr of molten salt to be supplied to the reheater 34 was controlled by following the above-described reheater molten salt quantity control process of using the temperature of the reheated steam as index. More specifically, the quantity Mr of molten salt to be supplied to the reheater 34 was so controlled as to make the reheated steam temperature at the inlet of the low-pressure turbine 38 to be equal to 400°C.

In Example 1, the steam temperature at the outlet of the low-pressure turbine 38 was 53.83°C. Since the steam temperature at the outlet of the low-pressure turbine 38 was reasonably low as pointed out above, there was no risk of damaging the turbine blades even if the low-pressure turbine 38 was operated for a long period of time. Additionally, the electric power generation efficiency of Example 1 was higher by about 0.91% than the electric power generation efficiency of Comparative Example 1. Thus, high-electric power generation efficiency could be achieved with Example 1.

In Reference Example 1, the solar thermal power generation system 100 was operated with the rated load (100% load). In other words, the solar thermal power generation system 100 was on a normal operation status in Reference Example 1.

In Reference Example 1, the steam temperature at the outlet of the low-pressure turbine 38 was 41.07°C. Since the steam temperature at the outlet of the low-pressure turbine 38 was low in Reference Example 1 in which the solar thermal power generation system 100 was in a normal operation status, there was no risk of damaging the turbine blades even if the low-pressure turbine 38 was operated for a long period of time.

As described above, with the method of controlling a solar thermal power generation system and also with a solar thermal power generation system according to the present invention, any undesirable rise of the temperature of the exhaust steam discharged from the low-pressure turbine can be prevented from taking place by controlling the quantity of molten salt to be supplied to the reheater, using the reheated steam temperature as index in the low load operation. Additionally, any undesirable fall of the temperature of the superheated steam to be supplied to the high-pressure turbine can also be prevented from taking place. Therefore, with the method of controlling a solar thermal power generation system and also a solar thermal power generation system according to the present invention, the durability of the solar thermal power generation system can be improved without raising the cost of installing the system, while suppressing any undesirable rise of the temperature of exhaust steam so that high-efficiency power generation can be achieved.

### Reference Signs List

- 10:: heating section
- 20:: low-temperature thermal storage tank
- 30:: high-temperature thermal storage tank
- 32:: superheater
- 34:: reheater
- 36:: high-pressure turbine
- 38:: low-pressure turbine
- 40:: condenser
- 100:: solar thermal power generation system
- G:: generator

## Claims

1. A method of controlling a solar thermal power generation system (100) comprising:
a steam generator for generating steam by heating water with molten salt;
a superheater (32) for producing superheated steam by further heating the steam generated by the steam generator with molten salt;
a high-pressure turbine (36) driven by the superheated steam supplied from the superheater (32);
a reheater (34) for producing reheated steam by reheating the intermediary exhaust steam coming from the high-pressure turbine (36) with molten salt;
a low-pressure turbine (38) driven by the reheated steam supplied from the reheater (34);
a condenser (40) for condensing the exhaust steam coming from the low-pressure turbine (38) into water to be supplied to the steam generator; wherein
the method comprises a reheater molten salt quantity control process of controlling the quantity Mr of the molten salt to be supplied to the reheater (34); **characterized in that** the solar thermal power generation system further comprises a reheated steam temperature detector for detecting the temperature of the reheated steam to be supplied to the low-pressure turbine (38) and **in that**
the quantity Mr of the molten salt is controlled in the reheater molten salt quantity control process so as to make the temperature of the reheated steam not lower than 370°C and not higher than 430°C as detected by the reheated steam temperature detector in a low load operation with a load ratio not higher than a predetermined load ratio relative to the rated load of the power generation system.

2. The method according to claim 1, wherein the load of the low load operation with a load ratio not higher than a predetermined load ratio relative to the rated load of the power generation system is not lower than the minimum permissible load of the power generation system.

3. The method according to claim 1 or 2, wherein the molten salt contains sodium nitrate and potassium nitrate.

4. The method according to claim 1, wherein the power generation system further comprises:
a low-temperature thermal storage tank (20) for storing molten salt;
a heating section (10) for heating the molten salt supplied from the low-temperature thermal storage tank (20) with sunlight; and
a high-temperature thermal storage tank (30) for receiving at least part of the molten salt supplied thereto and storing the supplied molten salt.

5. The method according to claim 4, wherein the heating section (10) is of the parabolic trough type.

6. A solar thermal power generation system (100) comprising:
a steam generator for generating steam by heating water with molten salt;
a superheater (32) for producing superheated steam by further heating the steam generated by the steam generator with molten salt;
a high-pressure turbine (36) driven by the superheated steam supplied from the superheater (32);
a reheater (34) for producing reheated steam by reheating the intermediary exhaust steam coming from the high-pressure turbine (36) with molten salt;
a low-pressure turbine (38) driven by the reheated steam supplied from the reheater (32);
a condenser (40) for condensing the exhaust steam coming from the low-pressure turbine (38) into water to be supplied to the steam generator; and
a reheater molten salt quantity control section for controlling the quantity Mr of the molten salt to be supplied to the reheater (34), **characterized in that** the solar thermal power generation system (100) further comprises
a reheated steam temperature detector for detecting the temperature of the reheated steam to be supplied to the low-pressure turbine (38) and **in that**
the reheater molten salt quantity control section is configured to control the quantity Mr of the molten salt so as to make the temperature of the reheated steam not lower than 370°C and not higher than 430°C as detected by the reheated steam temperature detector in a low load operation with a load ratio not higher than a predetermined load ratio relative to the rated load of the power generation system.

7. The system according to claim 6, wherein it further comprises:
a low-temperature thermal storage tank (20) for storing molten salt;
a heating section (10) for heating the molten salt supplied from the low-temperature thermal storage tank (20) with sunlight; and
a high-temperature thermal storage tank (30) for receiving at least part of the molten salt supplied thereto and storing the supplied molten salt.

## Patentansprüche

1. Ein Verfahren zur Steuerung eines solarthermischen Stromerzeugungssystems (100), umfassend:
einen Dampferzeuger zum Erzeugen von Dampf durch Erhitzen von Wasser mit geschmolzenem Salz;
einen Überhitzer (32) zur Erzeugung von Heißdampf durch weiteres Erhitzen des durch den Dampfgenerator erzeugten Dampfes mit geschmolzenem Salz;
eine Hochdruckturbine (36), die durch den vom Überhitzer (32) gelieferten Heißdampf angetrieben wird;
einen Wiedererhitzer (34) zum Erzeugen von wiedererhitztem Dampf durch Wiedererhitzen des aus der Hochdruckturbine (36) kommenden Zwischenabdampfes mit geschmolzenem Salz;
eine Niederdruckturbine (38), die durch den aus dem Wiedererhitzer (34) zugeführten wiedererhitzten Dampf angetrieben wird;
einen Kondensator (40) zum Kondensieren des aus der Niederdruckturbine (38) kommenden Abdampfes zu Wasser, das dem Dampferzeuger zugeführt wird; wobei
das Verfahren einen Wiedererhitzer-Salzschmelzenmengenkontrollprozess des Kontrollierens der Menge Mr des dem Wiedererhitzer (34) zuzuführenden geschmolzenen Salzes umfasst; **dadurch gekennzeichnet, dass** das solarthermische Energieerzeugungssystem ferner einen Temperaturdetektor für wiedererhitzten Dampf umfasst, um die Temperatur des wiedererhitzten Dampfes, der der Niederdruckturbine (38) zugeführt werden soll, zu detektieren, und dass die Menge Mr des geschmolzenen Salzes kontrolliert wird durch den Wiedererhitzer-Salzschmelzemengenkontrollprozess, um die Temperatur des wiedererhitzten Dampfes nicht niedriger als 370°C und nicht höher als 430°C zu machen, wie sie vom Temperaturdetektor für wiedererhitzten Dampf in einem Niedriglastbetrieb mit einem Lastverhältnis, das nicht höher als ein vorbestimmtes Lastverhältnis relativ zur Nennlast des Stromerzeugungssystems ist, ermittelt wird.

2. Das Verfahren nach Anspruch 1, wobei die Last des Niedriglastbetriebs mit einem Lastverhältnis, das nicht höher als ein vorbestimmtes Lastverhältnis relativ zur Nennlast des Stromerzeugungssystems ist, nicht niedriger als die minimal zulässige Last des Stromerzeugungssystems ist.

3. Das Verfahren nach Anspruch 1 oder 2, wobei das geschmolzene Salz Natriumnitrat und Kaliumnitrat enthält.

4. Das Verfahren nach Anspruch 1, wobei das Energieerzeugungssystem weiter umfasst:
einen Niedrigtemperatur-Wärmespeichertank (20) zur Lagerung von geschmolzenem Salz;
einen Heizabschnitt (10) zum Erwärmen des geschmolzenen Salzes, das aus dem Niedrigtemperatur-Wärmespeichertank (20) zugeführt wird, mit Sonnenlicht; und
einen Hochtemperatur-Wärmespeichertank (30) zur Aufnahme mindestens eines Teils des ihm zugeführten geschmolzenen Salzes und zur Lagerung des zugeführten geschmolzenen Salzes.

5. Das Verfahren nach Anspruch 4, wobei der Heizabschnitt (10) vom Parabolrinnentyp ist.

6. Ein solarthermisches Stromerzeugungssystem (100) umfassed:
einen Dampferzeuger zur Erzeugung von Dampf durch Erhitzen von Wasser mit geschmolzenem Salz;
einen Überhitzer (32) zur Erzeugung von Heißdampf durch weiteres Erhitzen des durch den Dampfgenerator erzeugten Dampfes mit geschmolzenem Salz;
eine Hochdruckturbine (36), die durch den vom Überhitzer (32) gelieferten Heißdampf angetrieben wird;
einen Wiedererhitzer (34) zum Erzeugen von wiedererhitztem Dampf durch Wiedererhitzen des aus der Hochdruckturbine (36) kommenden Zwischenabdampfes mit geschmolzenem Salz;
eine Niederdruckturbine (38), die durch den vom Wiedererhitzer (32) gelieferten Heißdampf angetrieben wird;
einen Kondensator (40) zum Kondensieren des von der Niederdruckturbine (38) kommenden Abdampfes zu Wasser, das dem Dampferzeuger zugeführt wird; und
einen Wiedererhitzer-Salzschmelzemengensteuerabschnitt zum Steuern der Menge Mr der Salzschmelze, die dem Wiedererhitzer (34) zugeführt werden soll, **dadurch gekennzeichnet, dass** das solarthermische Energieerzeugungssystem (100) ferner einen Temperaturdetektor für wiedererhitzten Dampf zum Erfassen der Temperatur des der Niederdruckturbine (38) zuzuführenden wiedererhitzten Dampfes umfasst, und dass der Wiedererhitzer-Salzschmelzemengensteuerabschnitt so konfiguriert ist, dass er die Menge Mr des geschmolzenen Salzes so regelt, dass die Temperatur des wiedererhitzten Dampfes nicht niedriger als 370°C und nicht höher als 430°C ist, wie sie von dem Temperaturdetektor für wiedererhitzten Dampf in einem Niedriglastbetrieb mit einem Lastverhältnis, das nicht höher als ein vorbestimmtes Lastverhältnis relativ zur Nennlast des Stromerzeugungssystems ist, ermittelt wird.

7. Das System nach Anspruch 6, worin es ferner umfasst:
einen Niedrigtemperatur-Wärmespeichertank (20) zum Speichern von geschmolzenem Salz;
einen Heizabschnitt (10) zum Erwärmen des aus dem Niedrigtemperatur-Wärmespeichertank (20) zugeführten geschmolzenen Salzes mit Sonnenlicht; und
einen Hochtemperatur-Wärmespeichertank (30) zur Aufnahme mindestens eines Teils des ihm zugeführten geschmolzenen Salzes und zur Lagerung des zugeführten geschmolzenen Salzes.

## Revendications

1. Procédé de commande d'un système générateur d'énergie thermique solaire (100) comprenant :
un générateur de vapeur pour générer de la vapeur en chauffant de l'eau avec du sel fondu ;
un surchauffeur (32) pour produire de la vapeur surchauffée en chauffant davantage la vapeur générée par le générateur de vapeur avec du sel fondu ;
une turbine haute pression (36) entraînée par la vapeur surchauffée amenée depuis le surchauffeur (32) ;
un réchauffeur (34) pour produire de la vapeur réchauffée en réchauffant la vapeur d'échappement intermédiaire venant de la turbine haute pression (36) avec du sel fondu ;
une turbine basse pression (38) entraînée par la vapeur réchauffée amenée du réchauffeur (34) ;
un condenseur (40) pour condenser la vapeur d'échappement venant de la turbine basse pression (38) en eau à amener jusqu'au générateur de vapeur; dans lequel
le procédé comprend un processus de commande de quantité de sel fondu de réchauffeur qui commande la quantité Mr de sel fondu à amener jusqu'au réchauffeur (34) ;
**caractérisé en ce que** le système générateur d'énergie thermique solaire comprend un détecteur de température de vapeur réchauffée pour détecter la température de la vapeur réchauffée à amener jusqu'à la turbine basse pression (38) et **en ce que**
la quantité Mr de sel fondu est commandée dans le processus de commande de quantité de sel fondu de réchauffeur de manière à rendre la température de la vapeur réchauffée non inférieure à 370°C et non supérieure à 430°C telle que détectée par le détecteur de température de vapeur réchauffée dans une opération à faible charge avec un rapport de charge non supérieur à un rapport de charge prédéterminé, par rapport à la charge nominale du système générateur d'énergie.

2. Procédé selon la revendication 1, dans lequel la charge de l'opération à faible charge avec un rapport de charge non supérieur à un rapport de charge prédéterminé, par rapport à la charge nominale du système générateur d'énergie est non inférieure à la charge admissible minimum du système générateur d'énergie.

3. Procédé selon la revendication 1 ou 2, dans lequel le sel fondu contient du nitrate de sodium et du nitrate de potassium.

4. Procédé selon la revendication 1, dans lequel le système générateur d'énergie comprend en outre :
un réservoir de stockage thermique basse température (20) pour stocker du sel fondu ;
une section de chauffage (10) pour chauffer le sel fondu amené du réservoir de stockage thermique basse température (20) avec la lumière du soleil ; et
un réservoir de stockage thermique haute température (30) pour recevoir une partie au moins du sel fondu amené jusqu'à celui-ci et stocker le sel fondu amené.

5. Procédé selon la revendication 4, dans lequel la section de chauffage (10) est du type miroir cylindro-parabolique.

6. Système générateur d'énergie thermique solaire (100) comprenant :
un générateur de vapeur pour générer de la vapeur en chauffant de l'eau avec du sel fondu ;
un surchauffeur (32) pour produire de la vapeur surchauffée en chauffant davantage la vapeur générée par le générateur de vapeur avec du sel fondu ;
une turbine haute pression (36) entraînée par la vapeur surchauffée amenée du surchauffeur (32) ;
un réchauffeur (34) pour produire de la vapeur réchauffée en réchauffant la vapeur d'échappement intermédiaire venant de la turbine haute pression (36) avec du sel fondu ;
une turbine basse pression (38) entraînée par la vapeur réchauffée amenée du réchauffeur (34) ;
un condenseur (40) pour condenser la vapeur d'échappement venant de la turbine basse pression (38) en eau à amener jusqu'au générateur de vapeur; et
une section de commande de quantité de sel fondu de réchauffeur pour commander la quantité Mr de sel fondu à amener jusqu'au réchauffeur (34), **caractérisé en ce que** le système générateur d'énergie thermique solaire (100) comprend en outre un détecteur de température de vapeur réchauffée pour détecter la température de la vapeur réchauffée à amener jusqu'à la turbine basse pression (38) et **en ce que**
la section de commande de quantité de sel fondu de réchauffeur est configurée pour commander la quantité Mr de sel fondu de manière à rendre la température de la vapeur réchauffée non inférieure à 370°C et non supérieure à 430°C telle que détectée par le détecteur de température de vapeur réchauffée dans une opération à faible charge avec un rapport de charge non supérieur à un rapport de charge prédéterminé, par rapport à la charge nominale du système générateur d'énergie.

7. Système selon la revendication 6, dans lequel il comprend en outre :
un réservoir de stockage thermique basse température (20) pour stocker du sel fondu ;
une section de chauffage (10) pour chauffer le sel fondu amené depuis le réservoir de stockage thermique basse température (20) avec la lumière du soleil ; et
un réservoir de stockage thermique haute température (30) pour recevoir une partie au moins du sel fondu amené jusqu'à celui-ci et stocker le sel fondu amené.
